# EUROPEAN PATENT SPECIFICATION

(11) **EP 3 227 123 B1**
(45) Date of publication and mention of the grant of the patent: **27.01.2021**
(21) Application number: 15825823.6
(22) Date of filing: 04.12.2015
(51) Int. Cl.: B60B 35/12, B60B 35/16, B60B 35/14

(54) **METHOD FOR MANUFACTURING A REAR AXLE OF A VEHICLE AND REAR AXLE OBTAINED**
VERFAHREN ZUR HERSTELLUNG EINER HINTERACHSE EINES FAHRZEUGS UND DAMIT HERGESTELLTE HINTERACHSE
PROCÉDÉ DE FABRICATION D'UN ESSIEU ARRIÈRE D'UN VÉHICULE ET ESSIEU ARRIÈRE OBTENU

(30) Priority: 04.12.2014 IT TO20141012
(43) Date of publication of application: 11.10.2017
(73) Proprietor: FPT Industrial S.p.A., 10156 Torino (IT)
(72) Inventor: ROSSIA, Giorgio, I-10141 Torino (IT)
(74) Representative: Fiume, Orazio
(86) International application number: PCT/IB2015/059368
(87) International publication number: WO 2016/088096

(56) References cited:
- WO-A1-2008/027120
- DE-A1- 3 128 341
- DE-A1-102013 006 240
- US-A- 1 934 854
- US-A- 5 553 927
- US-A1- 2003 062 765
- US-B1- 6 254 196

## Description

### Scope of the invention

The present invention relates to a method for manufacturing a rear axle and a rear axle obtained by said method for land vehicles, in particular for industrial and commercial vehicles.

### State of the art

Rear axles are generally made of two tubular elements, called axle arms, which extend from the central part, generally the differential, to the sides of the vehicle, i.e. the wheels. Each of the ends comprises connection elements to connect the brake calipers. Evidently, the end of the axle requires extremely precise machining at least to make the connection elements of the brake calipers.

The handling of said tubular elements is not particularly easy due to their longitudinal extension, so the operations are long and costly.

In some cases, the axle end comprises a tapered portion on which the wheel bearing is keyed externally. A fortiori the end needs to be turned to obtain a suitable support for the wheel bearing.

Today forming processes make it possible to obtain metal tubular elements which end with a sort of flat flange perpendicular to the axis of the tubular element machined, without performing any welding.

The extension of said flange, as a result of technological limitations or/and for savings of material, is very limited and is not sufficient to obtain a connection element for a brake caliper.

Examples of known axle portions are disclosed in US1934854A, US2003062765A1, US5553927A, WO2008027120A1 and US6254196B1. Document DE 31 28 341 A1 discloses the features of the preamble of the independent claims 1 and 6.

### Summary of the invention

The purpose of the present invention is to implement a rolling process in the construction of a vehicular rear axle, so as to permit a significant reduction of costs.

The basic idea of the present invention is to make an auxiliary element of reduced axial dimensions comprising a connection element for the brake caliper and capable of supporting a wheel bearing.

In other words, the precision machining is all concentrated on said auxiliary element of small dimensions, while the axle arm is obtained by rolling and the relative small end flange is sufficient for the reciprocal connection of the axle arm end to the auxiliary element.

The present invention relates to a method of manufacturing a rear axle of a vehicle.

Another purpose of the present invention is a rear axle comprising an axle arm and an auxiliary element capable of supporting a wheel bearing and a connection element for a brake caliper.

A further purpose of the present invention is an industrial or commercial vehicle comprising the aforementioned rear axle.

The claims describe preferred variants of the invention, forming an integral part of the present description.

### Brief description of the figures

Further purposes and advantages of the present invention will be clear from the detailed description below of an example of embodiment thereof (and of its variants) and from the appended drawings, provided merely by way of a non-limiting example, wherein:
Figure 1 shows a first axial cross-section of an example of embodiment of a rear axle according to the present invention,
Figure 2 shows a second axial cross-section of the example in Figure 1,
Figure 3 shows an enlargement of the axial cross-section in Figure 1,
Figure 4 shows an alternative variant to the embodiment shown in Figure 3.
Identical reference numerals and letters in the drawings refer to the same elements or components.

In the present description the term "second" component does not imply the presence of a "first" component. These terms are in fact used only for clarity and are not intended as limiting.

### Detailed description of embodiments

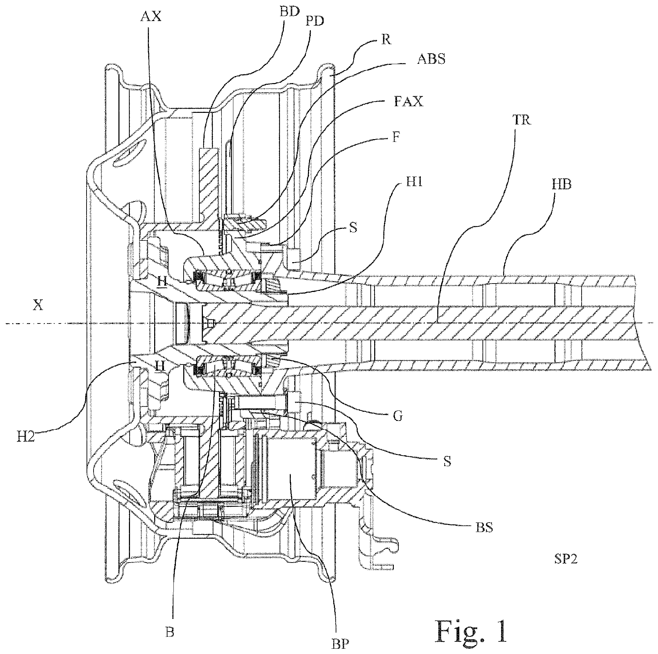

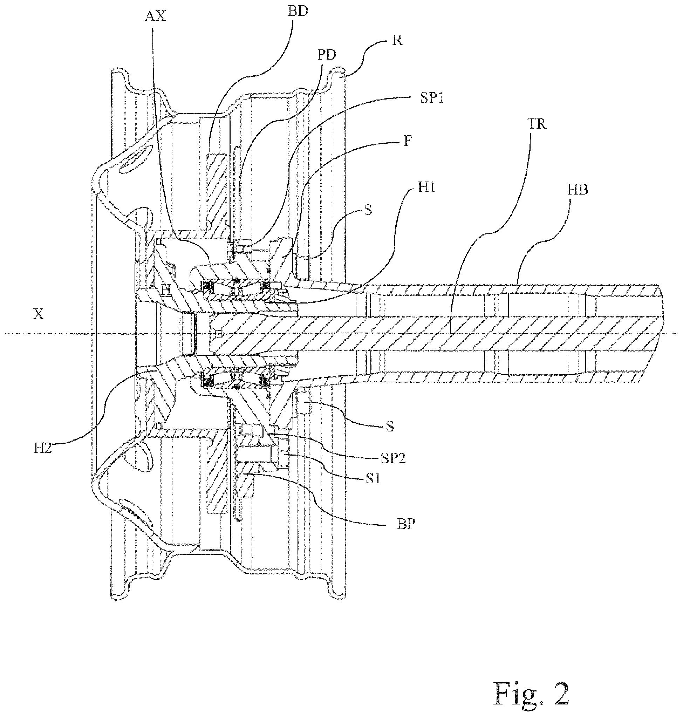

Figure 1 shows a longitudinal cross-section of a rear axle of an industrial or commercial vehicle according to the present invention. Figure 2 shows another axial cross-section, angularly displaced compared to the first, showing additional details attributable to the component AX described below.

The axle arm HB has a tubular shape and is made by rolling. In an end zone towards the wheel R, it comprises a flange F made in one piece with the same rolling process and not by means of a separate manufacturing process of the flange and successive assembly/welding to the axle arm HB.

An auxiliary element AX, also called bearing support, has a bell shape, i.e. like an omega axial cross-section, and has a larger base FAX complementary to the aforementioned flange F to be connected thereto by means of the screws S arranged axially. In other words, the larger base FAX of the auxiliary element AX also defines a flange FAX complementary to the flange F of the axle arm HB.

The relative smaller base of the auxiliary element AX is open to allow the wheel hub H to fit axially inside the auxiliary element AX.

Said insertion causes the auxiliary element AX to be annular to the wheel hub H. As a result, an annular bearing B is arranged between the two, preferably formed of a pair of opposite conical bearings.

The wheel hub H is a tapered shape towards the first end part H1. The end part H2, opposite the tapered part H1, widens radially to support the brake disc BD and wheel rim R. The inner end part H1, tapered, comprises a threaded area suitable to be coupled to a corresponding locking nut G. This locking nut axially locks the bearing B, sandwiched between the wheel hub H and the bearing support AX.

As a result, once the wheel hub H has been inserted in the auxiliary element AX, with the bearing B annularly interposed, the nut G makes these three elements AX/B/H a single body, wherein the wheel hub H is rotatably joined to the auxiliary element AX along the axis X.

The auxiliary element, or bearing support AX comprises a radial support element BS, see Figure 1, which projects radially for a narrow angular portion in order to support the brake caliper BP.

Figure 2, instead, shows a screw S1 which locks the brake caliper BP to the bearing support AX.

Other angular portions, appropriately staggered and possibly equally spaced from one another at an angle may be provided for. For example, an angular portion SP1 is defined to support a possible protective disc PD generally connected in a parallel position to the brake disc to protect it from dust and from spurts of water.

The auxiliary element AX may further comprise an additional radial portion, see Figure 1, which projects radially in another angular direction to make the support of an ABS sensor possible.

According to the variant shown in the figures it may be seen that the speed sensor is made directly on a portion of the brake disc BD, but it may also be made on the wheel hub H, if properly shaped.

The outer end portion H2 of the wheel hub H widens radially to define a circular support flange, to support the brake disc BD and said wheel rim R.

The brake disc is in the standard shape, which is in itself known, and in the operating condition, its lower base is inserted to form a sandwich, between the end H2 of the wheel hub H and the rim R.

It is clear to see that there are strong similarities between the shape of the brake disc BD and the auxiliary element AX, both being bell-shaped with an open lower base. The wheel hub H may be solid or axially hollow or partially hollow.

In relation to the fact that the axle may be a drive axle or not, a drive shaft TR may be arranged inside the axle arm, along the extension axis X, with one end securely fastened rotatably to the inner end H1 of the wheel hub H. A coupling suitable for said purpose may provide for a grooved profile both in the end of the drive shaft TR and in a complementary coaxial cavity defined at least in the inner end H1 of the wheel hub H.

From the description provided here it is evident that the wheel hub H and the brake disc BD are axially symmetric. Instead, the auxiliary element AX may have an axial or partially axial symmetry excluding the radial portions
- SP2 supporting the brake caliper,
- supporting the ABS sensor and
- SP1 supporting the protection plate.

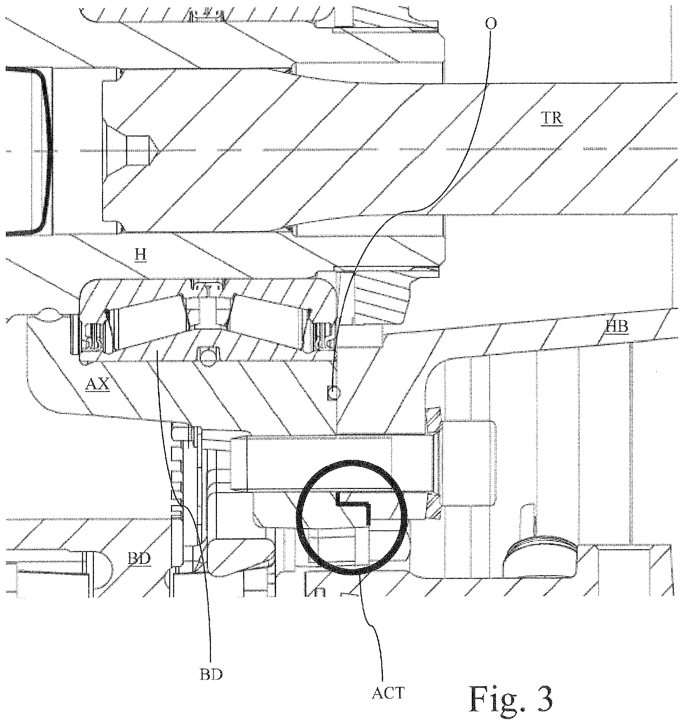

Figure 3 shows an enlargement of a part of Figure 1.

In the coupling part between the flange F and the larger base FAX of the component AX, a circumferential seat is made to house a gasket O.

In addition, both the flange F and the larger base FAX of the component AX may comprise machining operations permitting a self-centering shape coupling, generically referred to as ACT. Such machining may or may not be annular, or affect only angular portions of the aforesaid parts.

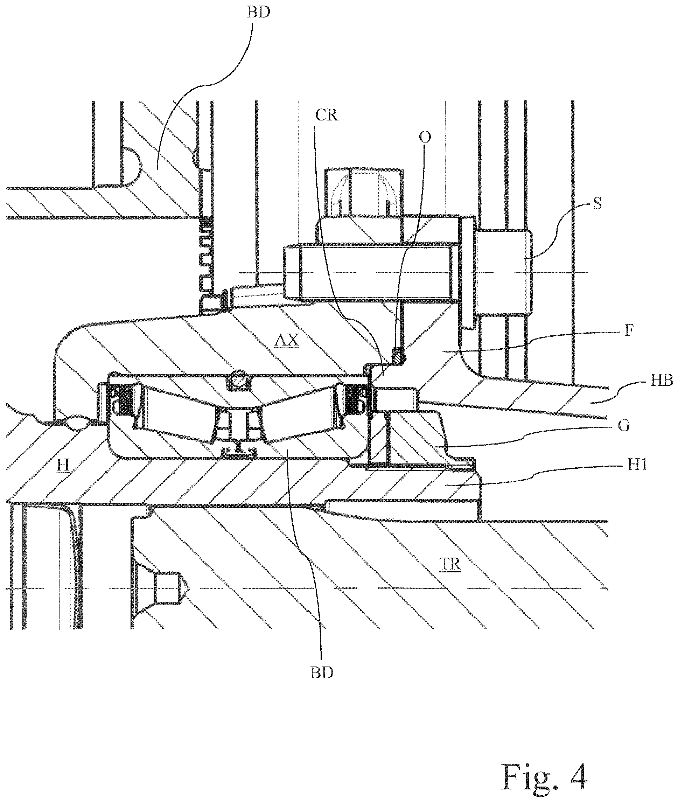

According to a preferred variant of the invention, not mandatory, shown in Figure 4, the axle arm HB, at the flange F, comprises a circumferential ridge CR which projects axially to insert itself in the cavity defined by the smaller base of the bell-shaped component AX.

Said ridge is preferably made at the mouth of the inner cavity of the axle arm HB. Correspondingly, a circumferential seat complementary to said ridge CR is made on the flange FAX of the auxiliary element AX.

The ridge CR can be obtained either during the aforesaid rolling process and possibly finished with a turning process or can be obtained entirely by turning of the flange F.

Preferably, the circumferential seat in the auxiliary element AX comprises a seat for a circumferential gasket O.

Advantageously, according to the present invention, the elements requiring high-precision construction are transferred, i.e.
- the brake caliper support,
- the support for the ABS sensor, where present, and
- the seat of the bearing B of the wheel hub H, onto the auxiliary element AX,
while the axle arm is made by means of a simple process that involves large tolerances, which do not affect the functioning of the final assembly.

Where a circumferential ridge CR is present with its seat made in the perimeter wall of the cavity, at its larger base, a turning process simple to implement is required that does not require high levels of accuracy.

Furthermore, the fact that the elements requiring greater precision are housed on the auxiliary element AX, and considering that said element AX has small axial dimensions, it is evident that the handling of the parts during the relative machining is made much simpler.

In particular, the machining operations of the component AX essentially comprise a first forging or casting of the component, which is subsequently turned, drilled and generally machined with precision techniques.

From the above description a person skilled in the art may make the object of the invention without introducing any further construction details. The elements and features shown in the various preferred embodiments may be combined while remaining within the scope of protection of the present invention as defined by the claims.

## Claims

1. Method for manufacturing a rear axle of a vehicle comprising:
- first production of a longitudinal tubular axle arm (HB) comprising a radial end flange (F) made in one piece with an end of said axle arm (HB),
- second production of an auxiliary element (AX) having a bell shape with a related first base (FAX) complementary with said radial flange (F) and an open second base for subsequent insertion of a wheel hub (H), wherein said second production comprises a step of producing said first base so as to comprise at least a first radial portion defining a brake caliper support (SP2),
said first base being larger than said second base, **characterized in that** the axle arm (HB) and the radial flange (F) are produced by means of a same rolling process.

2. Method according to claim 1, wherein said second machining operation of said auxiliary element (AX) is obtained by forging or by casting with subsequent turning and boring operations.

3. Method according to claim 1 or 2, wherein said second machining operation comprises a step of producing said first base so as to comprise at least a second radial portion defining a support (SP1) for a protective plate (PD) of a brake disc (BD) and/or a third radial portion to support an ABS sensor (ABS).

4. Method according to one of the preceding claims, further comprising a third machining operation wherein said wheel hub (H) is produced so as to have axial symmetry with a tapered inner end (H1) and adapted to be inserted into said auxiliary element (AX) to be rotatably supported thereby.

5. Method according to claim 4, wherein said third machining operation of said wheel hub (H) is performed so that said inner end (H) comprises a grooved coaxial cavity complementary to a drive shaft (TR) inside and coaxial to said axle arm (HB).

6. Rear axle assembly of a vehicle obtained by means of all the steps of any one of the preceding claims 1-5, comprising:
- a longitudinal tubular axle arm (HB) obtained by rolling, wherein a radial end flange (F) of said axle arm (HB) is made in one piece with an end of said axle arm (HB) and obtained during said rolling process,
- an auxiliary element (AX) having a bell shape with a related first base (FAX) complementary with said radial flange (F) and an open second base being smaller than the first base (FAX),- a wheel hub (H), adapted to be inserted through said second base to be rotatably associated with said auxiliary element (AX) by means of an annular bearing (B),
the first base comprising at least a first radial portion defining a brake caliper support (SP2).

7. Assembly according to claim 6, wherein said first base of said auxiliary component (AX) comprises at least a second radial portion defining a support (SP1) for a protective plate (PD) of a brake disc (BD) and/or a third radial portion for supporting an ABS sensor.

8. Assembly according to one of the preceding claims 6 or 7, wherein said wheel hub (H) has radial symmetry with a tapered inner end (H1) having a grooved coaxial cavity complementary to a drive shaft (TR).

9. Assembly according to one of the preceding claims, wherein said radial end flange (F) comprises self-centring means (ACT) and/or a circumferential ridge (CR) that projects axially with respect to the longitudinal extension of the axle arm (HB) and wherein said auxiliary element (AX) comprises a circumferential seat complementary with said ridge (CR).

10. Industrial or commercial vehicle comprising an axle arm according to any one of claims from 6 to 9.

## Patentansprüche

1. Verfahren zum Herstellen einer Hinterachse eines Fahrzeugs, das Folgendes umfasst:
- erstens Produzieren eines longitudinalen, rohrförmigen Achsschenkels (HB), der einen radialen Endflansch (F) aufweist, der einteilig mit einem Ende des Achsschenkels (HB) hergestellt ist,
- zweitens Produzieren eines Hilfselements (AX), das eine Glockenform mit einer darauf bezogenen ersten Basis (FAX), die zu dem radialen Flansch (F) komplementär ist, und einer offenen zweiten Basis für ein anschließendes Einsetzen einer Radnabe (H) besitzt, wobei das zweite Produzieren einen Schritt des Produzierens der ersten Basis, derart, dass sie wenigstens einen ersten radialen Abschnitt aufweist, der einen Bremssattelträger (SP2) definiert, umfasst,
wobei die erste Basis größer als die zweite Basis ist,
**dadurch gekennzeichnet, dass** der Achsschenkel (HB) und der radiale Flansch (F) mittels desselben Walzprozesses produziert werden.

2. Verfahren nach Anspruch 1, wobei der zweite Bearbeitungsvorgang des Hilfselements (AX) durch Schmieden oder Gießen mit nachfolgenden Dreh- und Bohrvorgängen erhalten wird.

3. Verfahren nach Anspruch 1 oder 2, wobei der zweite Bearbeitungsvorgang einen Schritt des Produzierens der ersten Basis umfasst, derart, dass sie wenigstens einen zweiten radialen Abschnitt, der einen Träger (SP1) für eine Schutzplatte (PD) einer Bremsscheibe (BD) definiert, und/oder einen dritten radialen Abschnitt, um einen ABS-Sensor (ABS) zu tragen, aufweist.

4. Verfahren nach einem der vorhergehenden Ansprüche, das ferner einen dritten Bearbeitungsvorgang umfasst, bei dem die Radnabe (H) produziert wird, derart, dass sie eine axiale Symmetrie mit einem konisch zulaufenden inneren Ende (H1) aufweist, das dafür ausgelegt ist, in das Hilfselement (AX) eingesetzt zu werden, um hiervon drehbar getragen zu werden.

5. Verfahren nach Anspruch 4, wobei der dritte Bearbeitungsvorgang der Radnabe (H) so ausgeführt wird, dass das innere Ende (H) einen genuteten koaxialen Hohlraum aufweist, der zu einer darin befindlichen Antriebswelle (TR) komplementär ist und zu dem Achsschenkel (HB) koaxial ist.

6. Hinterachsbaugruppe eines Fahrzeugs, die durch sämtliche Schritte nach einem der vorhergehenden Ansprüche 1-5 erhalten wird und Folgendes umfasst:
- einen longitudinalen, rohrförmigen Achsschenkel (HB), der durch Walzen erhalten wird, wobei ein radialer Endflansch (F) des Achsschenkels (HB) einteilig mit einem Ende des Achsschenkels (HB) hergestellt ist und während des Walzprozesses erhalten wird,
- ein Hilfselement (AX), das eine Glockenform mit einer darauf bezogenen ersten Basis (FAX), die zu dem radialen Flansch (F) komplementär ist, und einer offenen zweiten Basis, die kleiner ist als die erste Basis (FAX), besitzt,
- eine Radnabe (H), die dafür ausgelegt ist, durch die zweite Basis so eingesetzt zu werden, dass sie dem Hilfselement (AX) mittels eines ringförmigen Lagers (B) drehbar zugeordnet ist,
wobei die erste Basis wenigstens einen ersten radialen Abschnitt aufweist, der einen Bremssattelträger (SP2) definiert.

7. Baugruppe nach Anspruch 6, wobei die erste Basis der Hilfskomponente (AX) wenigstens einen zweiten radialen Abschnitt, der einen Träger (SP1) für eine Schutzplatte (PD) einer Bremsscheibe (BD) definiert, und/oder einen dritten radialen Abschnitt, um einen ABS-Sensor zu tragen, aufweist.

8. Baugruppe nach einem der vorhergehenden Ansprüche 6 oder 7, wobei die Radnabe (H) eine radiale Symmetrie mit einem konisch zulaufenden inneren Ende (H1) mit einem genuteten koaxialen Hohlraum, der zu einer Antriebswelle (TR) komplementär ist, besitzt.

9. Baugruppe nach einem der vorhergehenden Ansprüche, wobei der radiale Endflansch (F) Selbstzentrierungsmittel (ACT) und/oder einen Umfangssteg (CR), der in Bezug auf die longitudinale Erstreckung des Achsschenkels (HB) axial vorsteht, aufweist, wobei das Hilfselement (AX) einen Umfangssitz aufweist, der zu dem Steg (CR) komplementär ist.

10. Lastkraftwagen oder Lieferwagen, der einen Achsschenkel nach einem der Ansprüche 6 bis 9 umfasst.

## Revendications

1. Procédé pour fabriquer un essieu arrière d'un véhicule comprenant :
une première production d'un bras d'essieu tubulaire longitudinal (HB) comprenant une bride d'extrémité radiale (F) réalisée d'un seul tenant avec une extrémité dudit bras d'essieu (HB),
une seconde production d'un élément auxiliaire (AX) ayant une forme de cloche avec une première base (FAX) relative complémentaire de ladite bride radiale (F) et une seconde base ouverte pour l'insertion consécutive d'un moyeu de roue (H), dans lequel ladite seconde production comprend une étape de production de ladite première base afin de comprendre au moins une première partie radiale définissant un support d'étrier de frein (SP2),
ladite première base étant supérieure à ladite seconde base,
**caractérisé en ce que** le bras d'essieu (HB) et la bride radiale (F) sont produits au moyen d'un même processus de laminage.

2. Procédé selon la revendication 1, dans lequel ladite deuxième opération d'usinage dudit élément auxiliaire (AX) est obtenue par forgeage ou par moulage avec des opérations de tournage et d'alésage consécutives.

3. Procédé selon la revendication 1 ou 2, dans lequel ladite deuxième opération d'usinage comprend une étape pour produire ladite première base afin de comprendre au moins une deuxième partie radiale définissant un support (SP1) pour une plaque de protection (PD) d'un disque de frein (BD), et/ou une troisième partie radiale pour supporter un capteur d'ABS (ABS) .

4. Procédé selon l'une des revendications précédentes, comprenant en outre une troisième opération d'usinage, dans lequel ledit moyeu de roue (H) est produit afin d'avoir une symétrie axiale avec une extrémité interne progressivement rétrécie (H1) et adapté pour être inséré dans ledit élément auxiliaire (AX) pour être ainsi supporté en rotation par ce dernier.

5. Procédé selon la revendication 4, dans lequel ladite troisième opération d'usinage dudit moyeu de roue (H) est réalisée de sorte que ladite extrémité interne (H) comprend une cavité coaxiale rainurée complémentaire d'un arbre d'entraînement (TR) à l'intérieur et de manière coaxiale audit bras d'essieu (HB).

6. Ensemble d'essieu arrière d'un véhicule obtenu au moyen de toutes les étapes selon l'une quelconque des revendications 1 à 5, comprenant :
un bras d'essieu tubulaire longitudinal (HB) obtenu par laminage, dans lequel une bride d'extrémité radiale (F) dudit bras d'essieu (HB) est réalisée d'un seul tenant avec une extrémité dudit bras d'essieu (HB) et obtenue pendant ledit laminage,
un élément auxiliaire (AX) ayant une forme de cloche avec une première base (FAX) relative complémentaire avec ladite bride radiale (F) et une seconde base ouverte qui est inférieure à la première base (FAX), - un moyeu de roue (H), adapté pour être inséré à travers ladite seconde base pour être associé, en rotation, avec ledit élément auxiliaire (AX) au moyen d'un palier annulaire (B),
la première base comprenant au moins une première partie radiale définissant un support d'étrier de frein (SP2) .

7. Ensemble selon la revendication 6, dans lequel ladite première base dudit composant auxiliaire (AX) comprend au moins une deuxième partie radiale définissant un support (SP1) pour une plaque de protection (PD) d'un disque de frein (BD) et/ou une troisième partie radiale pour supporter un capteur d'ABS.

8. Ensemble selon l'une des revendications 6 ou 7, dans lequel ledit moyeu de roue (H) a une symétrie radiale avec une extrémité interne progressivement rétrécie (H1) ayant une cavité coaxiale rainurée complémentaire d'un arbre d'entraînement (TR).

9. Ensemble selon l'une des revendications précédentes, dans lequel ladite bride d'extrémité radiale (F) comprend un moyen d'auto-centrage (ACT) et/ou une crête circonférentielle (CR) qui fait saillie axialement par rapport à l'extension longitudinale du bras d'essieu (HB) et dans lequel ledit élément auxiliaire (AX) comprend un siège circonférentiel complémentaire avec ladite crête (CR).

10. Véhicule industriel ou utilitaire comprenant un bras d'essieu selon l'une quelconque des revendications 6 à 9.
